# FASCICULE DE BREVET EUROPEEN

(11) **EP 0 775 676 B1**
(45) Date de publication et mention de la délivrance du brevet: **12.01.2000**
(21) Numéro de dépôt: 96402461.6
(22) Date de dépôt: 18.11.1996
(51) Int. Cl.: C04B 7/345

(54) **Procédé pour la production de produits minéraux à contenus calorifiques importants à partir de déchets et produits en résultant**
Verfahren zur Herstellung mineralischer Produkte mit hohem Wärmegehalt ausgehend von Abfällen und entstehende Produkte
Process for the production of mineral products having high calorific value from waste and resultant products

(30) Priorité: 21.11.1995 FR 9513777
(43) Date de publication de la demande: 28.05.1997
(73) Titulaire: Carrières du Boulonnais, 62250 Ferques (FR)
(72) Inventeur: Beauvent, Guy, 62720 Wierre Effroy (FR)
(74) Mandataire: Coester, Jacques Charles

(56) Documents cités:
- EP-A- 0 347 808
- EP-A- 0 451 006
- DD-A- 139 938
- CHEMICAL ABSTRACTS, vol. 118, no. 22, 31 Mai 1993 Columbus, Ohio, US; abstract no. 218498, KURDOWSKI, WIESLAW ET AL: "Manufacture of cement clinkers from waste slurry from extraction in alumina manufacture" XP002008765 & PL-A-157 190 (INSTYTUT MINERALNYCH MATERIALOW BUDOWLANYCH, OPOLE, POL.)
- CHEMICAL ABSTRACTS, vol. 103, no. 26, 30 Décembre 1985 Columbus, Ohio, US; abstract no. 219933, J.MAJLING ET AL: "belite clinkers" page 296; XP002008766 & CS-A-227 542
- CHEMICAL ABSTRACTS, vol. 113, no. 16, 15 Octobre 1990 Columbus, Ohio, US; abstract no. 137576p, F. AGZAMOV ET AL: "method of obtaining belite binder" XP000184982 & SU-A-1 565 821 (UFA PETROLEUM INSTITUTE)
- CHEMICAL ABSTRACTS, vol. 92, no. 10, 10 Mars 1980 Columbus, Ohio, US; abstract no. 81227d, A. R ALLIK: "raw material resources for the production of cement in Guinea" page 307; XP002008767 & STROIT. MATER. POPUTNYKH PROD. PROM-STI., 1978, pages 85-88,
- CHEMICAL ABSTRACTS, vol. 106, no. 16, 20 Avril 1987 Columbus, Ohio, US; abstract no. 125028d, M.SHIRASAKA: "manufacture of gamma-dicalcium silicate powder" page 340; XP002008768 & JP-A-61 256 913 (ONODA CEMENT CO.)

## Description

La présente invention concerne le traitement des boues et particulièrement des boues de carrières qui constituent des résidus de lavage de pierres concassées provenant de carrières calcaires ou argilo-calcaires provenant par exemple de traitement d'eaux usées afin de rendre ces boues réutilisables.

Les boues de lavage présentent, dans l'exploitation d'une carrière ou du traitement de l'eau, des déchets inutilisables qu'il est nécessaire de stocker dans des bassins de grande dimension dans lesquels ces boues sont soumises à une évaporation naturelle lente. Les boues peuvent être mélangées ou additionnées de composants divers, par exemple des résidus de fumée de traitement de déchets industriels et/ou d'incinération d'ordures ménagères et/ou des boues industrielles contenant des minéraux divers, des oxydes de métaux lourds, du gypse, etc.

L'invention, par sa mise en oeuvre, permet de récupérer lesdites boues et de les traiter, pour l'essentiel, à partir de déchets combustibles industriels ou ménagers de toute nature, notamment des déchets cellulosiques de végétaux ou minéraux tels que des huiles, des hydrocarbures, des matières plastiques, etc. ce qui réduit les coûts de traitement.

L'invention permet, en outre, d'assurer l'épuration des gaz et des vapeurs de traitement issus de la mise en oeuvre du procédé lui-même tout en rendant possible l'obtention de produits pouvant constituer des charges, des pouzzolanes, des ciments voire des produits vitrifiés susceptibles d'encapsuler des agents polluants, par exemple des métaux et oxydes lourds contenus dans les boues traitées et/ou dans les combustibles utilisés dans le cours du traitement.

On obtient de la sorte, pour un faible prix de revient, des produits à contenu calorifique important proches de certains ciments mais bien inférieurs en coût à ceux-ci ainsi que des produits vitrifiés encapsulant des agents polluants et pouvant être utilisés en tant que charges ou liants pour la construction d'ouvrages divers sans risque de pollution ultérieure des terrains ou nappes dans lesquels les produits obtenus par le procédé de l'invention sont utilisés. En outre, les produits obtenus sont extrêmement fins et peuvent présenter une granulométrie naturelle de l'ordre de 5000 blaines.

L'invention permet, en outre, de réduire la quantité de chaleur transmise à l'atmosphère par rapport à ce que serait la combustion simple des déchets utilisés comme source de chaleur.

Conformément à l'invention, le procédé pour la production de produits minéraux à contenu calorifique important à partir de déchets et produits en résultant, est caractérisé comme decrit dans la revendication 1. Suivant d'autres caractéristiques de l'invention :
- les boues contiennent :
   32,5 % de CaCO₃
   30 % d'argile
   22 % de SiO₂
   10 % de Al₂O3
- la température est élevée à au moins 1200°C.
- on traite les boues dans un four chauffé au moins en partie à partir de déchets industriels, ménagers et analogues,
- les boues sont issues indifféremment du lavage de produits concassés de carrières, de résidus de traitement de l'eau,
- les boues sont additionnées de résidus de fusion, de déchets industriels, d'ordures ménagères et autres boues contenant des minéraux et des oxydes métalliques,
- les gaz contenus dans le four sont traités, notamment abattus, en partie au moins par de la chaux obtenue en cours de traitement,
- les produits en circulation dans le four sont recyclés au moins en partie,
- une partie au moins des produits en circulation est soumise à une trempe,
- les boues à traiter sont granulées avant d'être traitées,
- une partie au moins des produits est portée au moins à une température provoquant l'encapsulage d'agents polluants contenus dans les boues traitées,
- la température est élevée jusqu'à la température de vitrification,
- une addition de gypse naturel ou synthétique de 5 à 10 % pour la formation d'un ciment à prise rapide,
- l'addition de fluorure de calcium agissant en tant que fondant abaissant la température d'encapsulage,
- le mélange de 20 à 80 % du produit est obtenu avec du ciment Portland,
- le four est du type à cyclones successifs et les produits sont amenés à circuler à contre-courant dans les cyclones communiquant avec au moins un brûleur constitué par un four,
- la température est élevée dans un four secondaire préchauffé par un four primaire qui le contient en partie au moins.

Diverses autres caractéristiques de l'invention ressortent d'ailleurs de la description détaillée qui suit.

Une forme de réalisation de l'objet de l'invention est représentée à titre d'exemple non limitatif aux dessins annexés.
La fig. 1 est un schéma synoptique d'une installation de traitement pour l'obtention de produits à fort contenu calorifique.
La fig. 2 est une courbe comparative illustrant des durées de prise de produits comparables.

Dans ce qui suit, les produits de base à traiter sont constitués par des boues de lavage de pierres calcaires extraites en carrière.

Il a été constaté que d'une façon générale sur un site donné, les boues de lavage de pierres calcaires concassées contenaient, après décantation dans un bassin, un rapport stoechiométrique sensiblement constant de :
X₁ % de CaCO₃
X₂ % d'argile
X₃ % de SiO₂
X₄ % de H₂O

A titre d'exemple, sur un site d'extraction particulier de pierres calcaires situé au nord de la France près de la ville de Dunkerque, il fut déterminé que les boues à traiter suivant l'invention contenaient :

32,5 % de CaCO₃ (1)

30 % d'argile

22 % de SiO₂

10 % de Al₂O₃

Outre les composés minéraux ci-dessus de base, les boues contenaient des oxydes métalliques. Une analyse chimique montra la présence dans les boues de :
0,75 % de MgO
2,51 % de Fe₂O₃
0,42 % de TiO₂
1,15 % de K₂O
0,03 % de MnO
0,09 % de P₂O₅
0,06 % de So₃
0,09 % de Na₂O
0,02 % de SrO
0,01 % de Cr₂O₃

Des analyses chimiques détaillées ont, en outre, montré l'existence de traces de métaux et alcaloïdes divers dont la concentration ou la dispersion doit être évitée au moins pour certains d'entre eux lors de la récupération des boues qui les contiennent et leur mise en place ultérieure en des lieux devant être protégés, par exemple à proximité de nappes phréatiques.

Parmi ces traces, il fut trouvé :

| ELEMENTS | PARTIE PAR MILLION (ppm) | ELEMENTS | PARTIE PAR MILLION (ppm) |
|---|---|---|---|
| TL | 0,04 | Dy | 4,16 |
| Ta | 0,90 | Sm | 5,24 |
| Bi | 0,47 | Cd | 0,72 |
| Lu | 0,33 | Pb | 9,74 |
| Tm | 0,35 | Co | 12,01 |
| Tb | 0,72 | As | 17,25 |
| W | 1,61 | La | 29,85 |
| Eu | 1,07 | Nd | 26,38 |
| Sb | 1,27 | Pb | 50,25 |
| Hf | 4,34 | Zr | 127,00 |
| Ho | 0,91 | U | 4,55 |
| Nb | 9,96 | Ce | 56,17 |
| Th | 6,21 | Cu | 21,30 |
| Mo | 2,38 | Y | 28,40 |
| Yb | 2,23 | V | 91,45 |
| Er | 2,25 | Zn | 74,20 |
| Os | 9,18 | Ba | 127,00 |
| Be | 1,07 | Cr | 119,50 |
| Pr | 6,67 | Sc | 18,65 |
| Ga | 11,15 | | |
| Gd | 4,45 | | |

Après malaxage, décantation et déshydratation par évaporation naturelle, le mélange stoechiométrique (1) ci-dessus se présentait sous la forme de fines calcaires de 0 à 100 µ.

Le calcul des probabilités montra, de même que des expériences de contrôle, que l'origine des fines dans le bassin d'extraction ne modifiait pas substantiellement la stoechiométrie des composants.

Ces fines calcaires furent traitées dans un granulateur pour réaliser des granulats de 0 à 2 mm.

Les fines, de préférence après leur granulation, furent traitées thermiquement dans une enceinte de décarbonatation ayant pour effet, au voisinage de 900°C, de réduire le CaCO₃ en CaO et CO₂ et, par conséquent, de produire de la chaux.

Lorsque la production de chaux n'est pas souhaitable eu égard aux impuretés contenues dans les boues d'origine ou pour d'autres motifs, la température est augmentée, par exemple jusqu'à 1200°C pour obtenir une forme cristallisée à propriété hydraulique de (CaO)₂ (SiO₂)β, dénommée dans ce qui suit C₂Sβ, qui présente une structure pyramidale et dans lequel β est de la belite.

Le C₂Sβ obtenu présente des propriétés hydrauliques mais à activité lente tout au moins en ce qui concerne l'initiation desdites propriétés hydrauliques pour la fonction de prise qui en résulte.

Il a été constaté cependant que le C₂Sβ qui est un produit hydraulique à caractéristiques de liant peut avantageusement être mélangé à du ciment Portland par exemple dans une proportion respective de 20 % / 80 % pour constituer un liant de grande stabilité, ce liant pouvant faire prise à l'eau de mer.

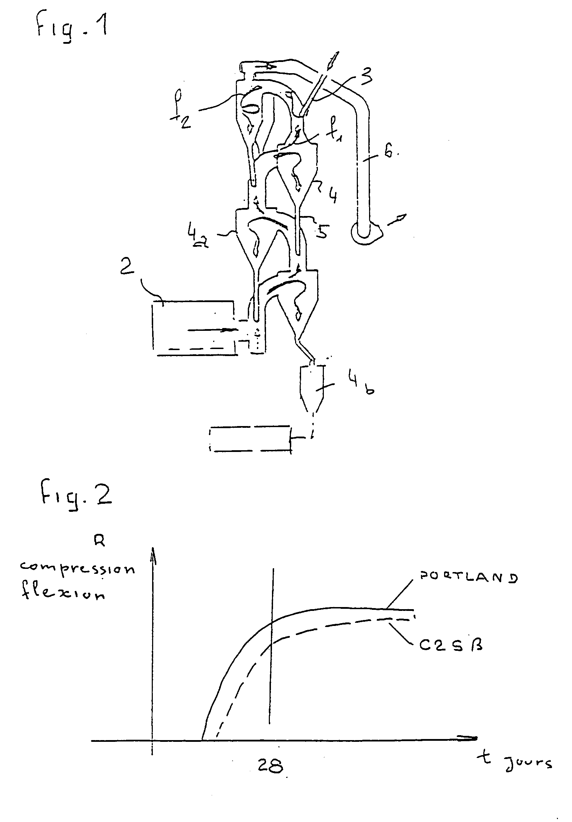

La fig. 2 montre, à titre d'exemple, une courbe faisant apparaître les vitesses respectives de prise, en trait plein, du ciment Portland et en traits pointillés du C₂Sβ dans le rapport ci-dessus.

On constate que, sans autre additif, le durcissement commence à intervenir dans un délai de l'ordre de 8 jours pour atteindre un premier seuil caractéristique à l'issue de 28 jours, le C₂Sβ en mélange au ciment Portland dans leurs rapports 20-80 rejoignant sensiblement la caractéristique de ce dernier à l'issue de plusieurs mois et demeurant ensuite d'une grande stabilité ce qui permet de l'utiliser pour des ouvrages nécessitant des coulées successives mais devant présenter une grande homogénéité de structures comme c'est le cas par exemple des barrages, des digues, etc. En augmentant la proportion de C₂Sβ on réduit le dégagement de chaleur lors de l'hydratation, ce qui réduit concomitamment le retrait en permettant la réalisation d'ouvrages de grande stabilité.

Une autre opération, qui est mise en oeuvre lorsqu'il est souhaité d'obtenir seulement du C₂Sβ, consiste, pour en augmenter la concentration, à faire subir au C₂Sβ à haute température une trempe brusque, par exemple une trempe à l'air dans un cyclone. Le C₂Sβ ainsi obtenu peut avantageusement ensuite être utilisé pour l'encapsulage de déchets devant être vitrifiés.

En portant la température au-delà de 1200°C comme cela est possible en utilisant par exemple une torche à plasma, on obtient des produits vitrifiés formant des pièges encapsuleurs pour les métaux lourds par exemple le cadmium, le plomb et ses composés, et les oxydes de métaux lourds tels que l'oxyde de titane qui sont des agents pouvant être présents dans les boues utilisées.

Pour assurer la formation de pouzzolanes, la décarbonatation des boues et ensuite la formation de C₂Sβ, l'invention met en oeuvre des fours alimentés à partir de déchets combustibles de toute nature par exemple des déchets industriels, des ordures ménagères, des déchets hospitaliers, etc. et, de façon générale, tous les déchets à base de cellulose de même que les déchets contenant des produits gras, des hydrocarbures, des huiles de coupe et analogues dont les produits résiduaires de combustion sont amenés à être recyclés à partir de la production de C₂Sβ pour être concentrés, la partie à concentrer pouvant ensuite être portée à température plus élevée pour être vitrifiée en encapsulant les agents polluants issus tant des boues que des gaz des fours de travail et devant être éliminés.

Bien que différents types de four puissent être mis en oeuvre pour l'obtention du C₂Sβ, il est avantageux, comme l'illustre la fig. 1, de mettre en oeuvre un four à colonne montante 1 et à recyclage comportant un ou des brûleurs 2 constitués eux-mêmes par exemple par un ou des fours et permettant de développer une température de l'ordre de 1200°C dans la colonne montante dans laquelle on fait circuler les fines issues des granulats de boues et les granulats injectés en tête par un conduit 3 menant à un cyclone 4 débouchant sur un conduit de ré-injection 5 menant à un second cyclone 4a, etc.

Les produits ainsi traités sont ré-injectés à contre-courant comme indiqué par les flèches f1, f2 pour assurer une circulation à contre-courant.

Une fraction des produits traités est ensuite conduite par un circuit 6 à une trémie de stockage du C₂Sβ.

Lorsque les produits doivent être soumis à une vitrification à température, plus élevée, supérieure à 1200°C, ils sont dérivés, par exemple du cyclone 4b, pour être amenés à passer dans un autre four de même type ou de réalisation différente par exemple à plasma ou analogue.

Lorsque des déchets industriels ou ménagers sont utilisés pour le chauffage, ce sont le ou les brûleurs 2 qui les consument et qui peuvent évidemment faire partie intégrante du four s'il est d'un autre type que le four à colonne montante illustré au dessin.

Lorsqu'il y a lieu de procéder à un traitement à très haute température par exemple supérieure à 1200°C, il est avantageux selon l'invention de prévoir, dans le four principal par exemple à l'intérieur de la colonne montante, une cavité de four secondaire dans laquelle le produit à traiter ou la fraction de produit à traiter est amené, cette cavité de four secondaire étant préchauffée par le four principal et la source de chaleur complémentaire par exemple une torche à plasma n'intéressant que l'intérieur de la cavité dudit four complémentaire.

La disposition combinée de deux ou plus de deux fours est réalisable également lorsque le four principal est un four à grille ou un four à lit fluidisé ou d'un autre type pour permettre l'utilisation simultanée des calories provenant de déchets. Cette disposition ne nécessite ainsi un apport de calories chères que pour une élévation de températures relativement faible comprise entre celle du four principal et celle du four secondaire utilisé pour la calcination à température élevée.

Subsidiairement, il est avantageux de traiter les gaz de combustion au moins dans le four principal pour les abattre au moyen de la chaux produite afin notamment d'assurer l'adsorption de SO₂.

Il est possible dans d'autres exemples de réalisation d'utiliser des boues d'autres origines par exemple des boues résiduaires industrielles, de traitement des eaux usées, etc. Les boues peuvent être mélangées entre elles et de préférence avec les boues calcaires considérées dans ce qui précède. Le traitement de calcination est effectué comme décrit et il est également possible d'apporter d'autres constituants par exemple du gypse naturel ou artificiel pour accélérer la vitesse de prise du ciment bélitique obtenu après calcination. Un apport de 5 à 10 % de gypse permet l'obtention d'un ciment à prise rapide correspondant à un ciment Portland. De même, l'adjonction d'oxyde de fer Fe203 rend possible l'obtention d'un ciment dont la prise peut s'effectuer à basse température, inférieure à 0°C.

Lorsqu'il y a lieu de réaliser l'encapsulage de résidus, notamment de métaux lourds, une caractéristique supplémentaire de l'invention consiste à ajouter un fondant tel que le fluorure de calcium ce qui rend possible l'obtention d'un ciment bélitique sulfureux réalisant l'encapsulage à partir de 950°C.

L'invention n'est pas limitée à l'exemple de réalisation représenté et décrit en détail car diverses modifications peuvent y être apportées sans sortir de son cadre.

## Revendications

1. Procédé pour la production de produits minéraux à contenu calorifique important à partir de déchets et produits en résultant, caractérisé en ce que les déchets sont des boues de carrières calcaires ou argilo calcaires, en ce qu'on soumet les boues à un malaxage d'homogénéisation pour obtenir un produit homogénéisé, en ce qu'on réalise un mélange stoechiométrique au moins de CaCO₃, d'argile et de SiO₂ à partir dudit produit homogénéisé, en ce qu'on fait circuler le mélange stoechiométrique réalisé dans au moins un four de chauffage et de calcination de sorte que de la chaux est produite à la température de décarbonatation du CaCO₃, en ce qu'on sépare au moins en partie cette chaux, et en ce qu'on élève la température à une valeur suffisante pour obtenir (CaO)₂ (SiO₂)β à propriétés hydrauliques et à forme cristallisée, ou β est la bélite.

2. Procédé suivant la revendication 1, caractérisé en ce que les boues contiennent :
32,5 % de CaCO₃
30 % d'argile
22 % de SiO₂
10 % de Al₂O3

3. Procédé selon l'une des revendications 1 ou 2, caractérisé en ce que la température est élevée à au moins 1200°C.

4. Procédé suivant l'une des revendications 1 à 3, caractérisé en ce qu'on traite les boues dans un four chauffé au moins en partie à partir de déchets industriels, ménagers et analogues.

5. Procédé suivant l'une des revendications 1 à 4, caractérisé en ce que les boues sont additionnées de résidus de fusion, de déchets industriels, d'ordures ménagères et autres boues contenant des minéraux et des oxydes métalliques.

6. Procédé suivant l'une des revendications 1 à 4, caractérisé en ce que les gaz contenus dans le four sont traités, notamment abattus, en partie au moins par de la chaux obtenue en cours de traitement.

7. Procédé suivant l'une des revendications 1 à 4, caractérisé en ce que les produits en circulation dans le four sont recyclés au moins en partie.

8. Procédé suivant l'une des revendications 1 à 4, caractérisé en ce qu'une partie au moins des produits en circulation est soumise à une trempe.

9. Procédé suivant l'une des revendications 1 à 7, caractérisé en ce que les boues à traiter sont granulées avant d'être traitées.

10. Procédé suivant l'une des revendications 1 à 9, caractérisé en ce qu'une partie au moins des produits est portée à une température provoquant l'encapsulage d'agents polluants contenus dans les boues traitées.

11. Procédé suivant la revendication 10, caractérisé en ce que la température est élevée jusqu'à la température de vitrification.

12. Procédé suivant l'une des revendications 1 à 11, caractérisé par une addition de gypse naturel ou synthétique de 5 à 10 % pour la formation d'un ciment à prise rapide.

13. Procédé suivant l'une des revendications 9 à 11, caractérisé par l'addition de fluorure de calcium agissant en tant que fondant abaissant la température d'encapsulage.

14. Procédé suivant l'une des revendications 1 à 13, caractérisé par le mélange de 20 à 80 % du produit obtenu avec du ciment Portland.

15. Procédé suivant l'une des revendications 1 à 14, caractérisé en ce que le four est du type à cyclones successifs (4, 4a, ...) et en ce que les produits sont amenés à circuler à contre-courant dans les cyclones communiquant avec au moins un brûleur (2) constitué par un four.

16. Procédé suivant les revendications 8 et 9, caractérisé en ce que la température est élevée dans un four secondaire préchauffé par un four primaire qui le contient en partie au moins.

## Claims

1. Method for the production of mineral products having a high calorific value from waste materials and resultant products, characterized in that the waste materials are slurries of calcareous or calcareo-argilaceous querries, in that the slurries are submitted to a homogenizing mixing for obtaining a homogenized product, in that a stoichiometric mixture is formed of at least CaCO₃, clay and SiO₂ from said homogenized product, in that the stoichiometric mixture as formed is made to circulate in at least one heating and calcinating furnace whereby a lime product is produced at the temperature for decarbonating CaCO₃, in that at least part of this lime product is separated, and in that the temperature is raised to a value that is sufficient for obtaining (CaO)₂ (SiO₂)β having hydraulic properties and a crystallized form, wherein β is belite.

2. Method as set forth in claim 1, characterized in that the slurries comprise :
32.5 % of CaCO₃
30 % of clay
22 % of SiO₂
10 % of Al₂O₃

3. Method according to one of claims 1 or 2, characterized in that the temperature is raised to at least 1200 °C.

4. Method according to one of claims 1 to 3, characterized in that the slurries are treated in an oven that is heated at least in part from industrial, house and the like waste materials.

5. Method according to one of claims 1 to 4, characterized in that the slurries are added with melting residues of industrial waste materials, house waste materials and other slurries that contain minerals and metal oxides,

6. Method according to one of claims 1 to 4, characterized in that the gases that are contained in the oven are treated, in particular reduced, at least in part by lime product obtained upon treatment.

7. Method according to one of claims 1 to 4, characterized in that the products that circulate in the oven are recycled at least in part.

8. Method according to one of claims 1 to 4, characterized in that a part at least of the products that circulate is submitted to a quenching operation.

9. Method according to one of claims 1 to 7, characterized in that the slurries to be treated are granulated before being treated.

10. Method according to one of claims 1 to 9, characterized in that a part at least of the products is raised to a temperature for encapsulating polluting matters that are contained in the treated slurries.

11. Method according to claim 10, characterized in that the temperature is raised up to the vitrification temperature.

12. Method according to one of claims 1 to 11, characterized by adding 5 to 10 % of natural or synthetic gypsum for forming a quick hardening cement.

13. Method according to one of claims 9 to 11, characterized by adding calcium fluoride acting as a flux melting product for lowering the encapsulating temperature.

14. Method according to one of claims 1 to 13, characterized by mixing 20 to 80 % of the product that is obtained with Portland cement.

15. Method according to one of claims 1 to 14, characterized in that the oven is of a type with successive cyclones (4, 4a, ...), and in that the products are brought to counterflow circulate in the cyclones communicating with at least one burner (2) formed by an oven.

16. Method according to one of claims 8 and 9, characterized in that the temperature is raised in a secondary oven which is pre-heated by a primary oven that contains it at least in part.

## Patentansprüche

1. Verfahren zur Herstellung mineralischer Produkte mit hohem Wärmegehalt ausgehend von Abfällen und Produkten daraus, **dadurch gekennzeichnet,** daß die Abfälle kalkhaltige oder ton- und kalkhaltige Schlämme aus Steinbrüchen sind, daß man die Schlämme einem Homogenisierungskneten unterzieht, um ein homogenisiertes Produkt zu erhalten, daß man ausgehend von diesem homogenisierten Produkt eine stöchiometrische Mischung wenigstens des CaCO₃, des Tons und des SiO₂ einhält, daß man die stöchiometrische Mischung durch wenigstens einen Kalkbrennofen zikuliert derart, daß bei der Dekarbonatisierungstemperatur des CaCO₃ Kalk hergestellt wird, daß man diesen Kalk wenigstens zum Teil abtrennt und daß man die Temperatur auf einen Wert erhöht, der ausreicht, um (CaO₂) (SiO₂) β mit hydraulischen Eigenschaften und in kristallisierter Form zu erhalten, wobei β Belit ist.

2. Verfahren nach Anspruch 1, **dadurch gekennzeichnet,** daß die Schlämme enthalten:
32,5 % CaCO₃
30 % Ton
22 % SiO₂
10 % Al₂O₃.

3. Verfahren nach einem der Ansprüche 1 oder 2, **dadurch gekennzeichnet,** daß die Temperatur auf wenigstens 1200°C erhöht wird.

4. Verfahren nach einem der Ansprüche 1 bis 3, **dadurch gekennzeichnet,** daß die Schlämme wenigstens teilweise in einem Heizofen behandelt werden, wobei von Industrieabfällen, Haushaltsabfällen und ähnlichem ausgegangen wird.

5. Verfahren nach einem der Ansprüche 1 bis 4, **dadurch gekennzeichnet,** daß den Schlämmen Schmelzrückstände von Industrieabfällen, Haushaltsmüll und andere Schlämme zugesetzt werden, die Mineralien und Metalloxyde enthalten.

6. Verfahren nach einem der Ansprüche 1 bis 4, **dadurch gekennzeichnet**, daß die in dem Ofen enthaltenen Gase zum Teil wenigstens durch den während der Behandlung erhaltenen Kalk behandelt, insbesondere abgebaut, werden.

7. Verfahren nach einem der Ansprüche 1 bis 4, **dadurch gekennzeichnet,** daß die durch den Ofen zirkulierenden Produkte wenigstens zum Teil recycelt werden.

8. Verfahren nach einem der Ansprüche 1 bis 4, **dadurch gekennzeichnet,** daß ein Teil wenigstens dar zirkulierenden Produkte einer Härtung unterzogen wird.

9. Verfahren nach einem der Ansprüche 1 bis 7, **dadurch gekennzeichnet,** daß die zu behandelnden Schlämme vor ihrer Behandlung granuliert werden.

10. Verfahren nach einem der Ansprüche 1 bis 9, **dadurch gekennzeichnet,** daß wenigstens ein Teil der Produkte auf eine Temperatur gebracht wird, die ein Einkapseln von Verunreinigungsmitteln hervorruft, die in den behandelten Schlämmen enthalten sind.

11. Verfahren nach Anspruch 10, **dadurch gekennzeichnet,** daß die Temperatur gerade bis zur Verglasungstemperatur erhöht wird.

12. Verfahren nach einem der Ansprüche 1 bis 11, **dadurch gekennzeichnet,** daß ein natürlicher oder synthetischer Gips in einer Menge von 5 bis 10 % zugegeben wird, um einen schnellbindenden Zement zu bilden.

13. Verfahren nach einem der Ansprüche 9 bis 11, **dadurch gekennzeichnet,** daß Calciumfluorid zugegeben wird, das als Schmelzzusatz wirkt, um die Einkapseltemperatur herabzusetzen.

14. Verfahren nach einem der Ansprüche 1 bis 13, **gekennzeichnet durch** die Mischung von 20 bis 80 % des erhaltenen Produkts mit Portlandzement.

15. Verfahren nach einem der Ansprüche 1 bis 14, **dadurch gekennzeichnet,** daß der Ofen die Bauart mit aufeinander folgenden Zyklonen (4, 4a, ...) aufweist und daß die Produkte so zugeführt werden, daß sie im Gegenstrom in den Zyklonen zirkulieren, die mit wenigstens einem Brenner (2) in Verbindung stehen, der von einem Ofen gebildet ist.

16. Verfahren nach den Ansprüchen 8 und 9, **dadurch gekennzeichnet,** daß die Temperatur in einem Hilfsofen erhöht wird, der von einem ihn wenigstens teilweise aufnehmenden Hauptofen vorgeheizt wird.
